# FASCICULE DE BREVET EUROPEEN

(11) **EP 1 505 747 B1**
(45) Date de publication et mention de la délivrance du brevet: **08.08.2012**
(21) Numéro de dépôt: 04026498.8
(22) Date de dépôt: 08.06.1998
(51) Int. Cl.: H04W 72/14

(54) **Procédé d'allocation de canaux de transmission à une station mobile, notamment en mode semi-duplex, dans un réseau de télécommunications mobiles, en mode paquet**
Verfahren zur Zuweisung von Übertragskanälen an eine Mobilstation, insbesondere in Halb - Duplex - Betriebsart, in einem mobilen Telekommunikationsnetz in Paket - Modus
Method for assigning transmission channels to a mobile station, in particular in half - duplex mode, in a mobile telecommunications network in packet mode

(30) Priorité: 10.06.1997 FR 9707197
(43) Date de publication de la demande: 09.02.2005
(62) Demande divisionnaire de: 98401357.3
(73) Titulaire: Alcatel Lucent, 75007 Paris (FR)
(72) Inventeur: Dupuy, Pierre, 75017 Paris (FR)
(74) Mandataire: El Manouni, Josiane

(56) Documents cités:
- EP-A- 0 681 406
- EP-A- 0 687 078
- EP-A- 0 720 310
- WO-A-95/31878
- DE-A- 19 543 845
- US-A- 5 535 207

## Description

La présente invention concerne d'une manière générale les techniques d'allocation de ressources de transmission dans les réseaux de télécommunications.

On sait qu'il existe essentiellement deux modes de transmission dans les réseaux de télécommunications :
- un mode de transmission appelé mode circuit, dans lequel les ressources de transmission sont allouées pour la durée d'une communication, qu'il y ait ou non transmission d'informations,
- un mode de transmission appelé mode paquet, dans lequel l'allocation de ressources de transmission est susceptible d'être modifiée en cours de communication, ce qui permet un meilleur partage des ressources de transmission entre plusieurs communications, en fonction des besoins instantanés de chacune d'elles.

Le mode circuit est plus particulièrement adapté aux communications vocales, tandis que le mode paquet est plus particulièrement adapté à la transmission de données, notamment dans le cas de débits de transmission irréguliers dans le temps, et de plus dissymétriques dans les deux sens de transmission, ce qui est notamment le cas lorsque le réseau est utilisé pour réaliser une transmission de données entre un terminal de télécommunications et un serveur informatique.

La présente invention concerne plus particulièrement l'utilisation du mode paquet dans les réseaux de télécommunications mobiles, une telle utilisation étant aussi connue sous le nom de GPRS ("General Packet Radio Service"), pour les réseaux de télécommunications mobiles de type GSM ("Global System for Mobile communications").

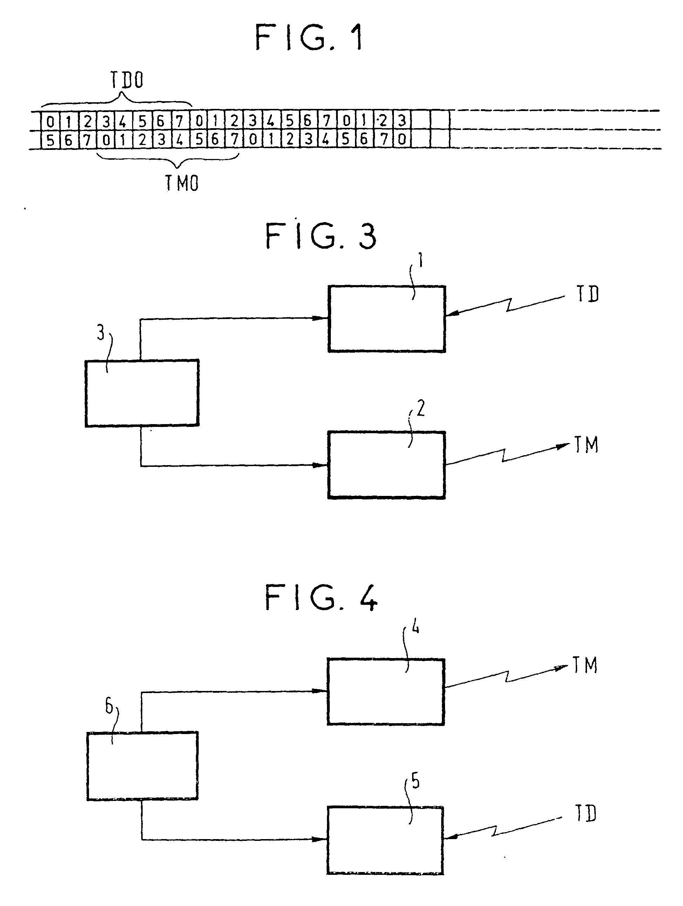

On rappelle que le réseau GSM est un réseau du type à accès multiple par répartition temporelle (ou TDMA, pour "Time Division Multiple Access") dans lequel les ressources de transmission sont constituées, comme rappelé sur la figure 1, par des canaux temporels ou intervalles de temps (ou IT, repérés ici simplement par leur numéro, de 0 à 7) de trames descendantes (telles que TD0) utilisées pour la transmission dans le sens réseau vers station mobile, et de trames montantes (telles que TM0) utilisées pour la transmission dans le sens station mobile vers réseau, ces trames descendantes et montantes étant portées par des fréquences porteuses distinctes, respectivement descendante et montante.

Dans un réseau GSM, un même intervalle de temps est alloué pour une communication en mode circuit, dans les trames descendantes et montantes, les trames montantes étant en outre décalées temporellement par rapport aux trames descendantes, comme rappelé sur la figure 1, d'une durée permettant à une station mobile opérant dans un mode dit semi-duplex (ou "half-duplex"), c'est-à-dire équipée de moyens permettant de réaliser alternativement, et non pas simultanément, une réception sur la fréquence descendante et une émission sur la fréquence montante, d'effectuer la commutation de fréquence nécessaire.

Dans le cas du service GPRS, les intervalles de temps alloués à une station mobile pour la durée d'une communication sont susceptibles de changer d'une trame à l'autre. En outre, il est connu d'informer la station mobile des intervalles de temps qui lui sont alloués dans le sens montant, pour une trame donnée, en lui adressant, dans le sens descendant, pendant la trame précédente, et sur chacun de ces mêmes intervalles de temps, une autorisation d'émission, cette autorisation d'émission étant en pratique contenue dans un champ de bits particulier, appelé USF (pour: "Uplink Status Flag").

Avec un tel mécanisme d'autorisation, on voit que pour augmenter le nombre d'intervalles de temps consécutifs alloués en émission, il est nécessaire d'augmenter de façon correspondante le nombre d'intervalles de temps consécutifs alloués en réception, mais qu'une limite à une telle augmentation est imposée par le fonctionnement en mode semi-duplex, qui oblige à prévoir entre les intervalles de temps alloués en réception et ceux alloués en émission un certain temps de garde pour pouvoir effectuer la commutation de fréquence nécessaire.

Par exemple, pour allouer à une station mobile, en émission, les quatre intervalles de temps consécutifs IT0 à IT3, il serait nécessaire d'allouer à cette station mobile, en réception, les quatre intervalles de temps consécutifs IT0 à IT3, ce qui en pratique, pour des stations mobiles de type standard (c'est-à-dire équipées d'un seul synthétiseur de fréquence, c'est-à-dire encore nécessitant un temps de garde égal à deux intervalles de temps) est impossible, comme on peut le vérifier à l'aide de la figure 1.

Ainsi, dans le cas du réseau GSM et de stations mobiles de type standard opérant en mode semi-duplex, le nombre maximum d'intervalles de temps consécutifs alloués par trame en réception est égal à quatre, et le nombre maximum d'intervalles de temps consécutifs alloués par trame en émission est égal à trois (quatre intervalles de temps consécutifs alloués en réception correspondant à deux intervalles de temps consécutifs alloués en émission, et trois intervalles de temps consécutifs alloués en réception correspondant à trois intervalles de temps consécutifs alloués en émission).

Pour éviter cet inconvénient, et par conséquent pour accroître la capacité d'émission dans chaque trame, il a été proposé de donner les autorisations d'émission, non plus par trame (ou autrement dit "à la volée"), mais par groupe de trames consécutives, ces autorisations étant alors données dans des messages de signalisation particuliers dits messages de ''Fixed Assignment". Avec une telle méthode, il devient alors possible d'allouer des trames entières en émission (ou en réception).

Une telle solution a cependant à son tour des inconvénients.

Notamment, le schéma d'allocation retenu pour une période d'allocation correspondant à un groupe de trames consécutives ne peut plus être modifié pendant toute cette période; or les besoins en allocation peuvent changer, notamment pour faire face à des demandes plus urgentes intervenant au cours de cette période, auquel cas le schéma d'allocation initial peut se révéler inadapté; en d'autres termes l'allongement de la période d'allocation entraîne un manque de réactivité du réseau.

En outre, si la station mobile reste trop longtemps en émission, elle ne peut plus, dans un réseau cellulaire tel que notamment le réseau GSM, se mettre régulièrement à l'écoute des cellules voisines, afin d'effectuer des mesures, en vue d'une part de déterminer la meilleure de ces cellules vers laquelle la communication pourra éventuellement être transférée dans le cadre d'une procédure de transfert (ou "handover"), et d'autre part en vue de pouvoir localiser cette station mobile, et donc de pouvoir contrôler sa puissance d'émission afin de réduire le niveau global d'interférence dans le réseau.

Bien sûr, il peut être prévu de réserver certains groupes de trames consécutives pour effectuer de telles mesures sur les cellules voisines, mais cela aboutit à une concentration dans le temps de ces mesures, qui nuit à une bonne représentativité des résultats obtenus (l'idéal, pour une bonne représentativité, étant de répartir ces mesures sur toutes les trames).

De plus, pour permettre au réseau de déterminer le nombre de trames à réserver pour de telles mesures, ceci oblige la station mobile à transmettre au réseau des messages de signalisation spécifiques indiquant notamment le nombre de cellules voisines, la vitesse à laquelle la station mobile peut effectuer ces mesures, ...etc, ceci au détriment de données utiles à transmettre.

Un exemple d'art antérieur est fourni par les documents EP 0 681 406 A et EP 0 687 078 A.

La présente invention a essentiellement pour but de proposer un système d'allocation qui soit un bon compromis entre les deux systèmes ainsi rappelés, c'est-à-dire qui permette essentiellement de conserver les avantages d'une allocation par trame, tout en autorisant une certaine augmentation de la capacité d'émission, par trame.

La présente invention a ainsi pour objet un procédé d'allocation de canaux de transmission de données à une station mobile, notamment en mode semi-duplex, dans un réseau de télécommunications mobiles du type à accès multiple par multiplexage de canaux de transmission, et en mode paquet dans lequel les canaux de transmission alloués à une station mobile, respectivement dans un sens dit descendant, du réseau vers la station mobile, et dans un sens dit montant, de la station mobile vers le réseau, sont susceptibles de changer à chaque période dite période d'allocation, une autorisation d'émission reçue sur un canal de transmission dans le sens descendant pour une période d'allocation donnée valant allocation de ce canal de transmission dans le sens montant pour la période d'allocation suivante,
ce procédé étant essentiellement caractérisé en ce qu'une autorisation d'émission reçue sur un canal de transmission dans le sens descendant pour une période d'allocation donnée vaut allocation, dans le sens montant, pour la période d'allocation suivante, non seulement de ce canal de transmission, dit aussi canal d'autorisation, mais aussi de canaux de transmission consécutifs, identifiables à partir dudit canal d'autorisation.

D'autres objets et caractéristiques de la présente invention apparaîtront à la lecture de la description suivante d'un exemple de réalisation, faite en relation avec les dessins ci-annexés dans lesquels:
- la figure 1 est un diagramme rappelant le principe des trames descendantes et montantes dans un réseau tel que notamment le réseau GSM,
- la figure 2 est un diagramme destiné à illustrer divers exemples d'allocation suivant l'invention, à titre d'exemple pour l'application au service GPRS prévu dans un réseau GSM,
- la figure 3 est un schéma de principe d'une station mobile, pour la mise en oeuvre du procédé d'allocation suivant l'invention,
- la figure 4 est un schéma de principe d'une station fixe (ou station de base) d'un réseau de télécommunications mobiles, pour la mise en oeuvre du procédé d'allocation suivant l'invention.

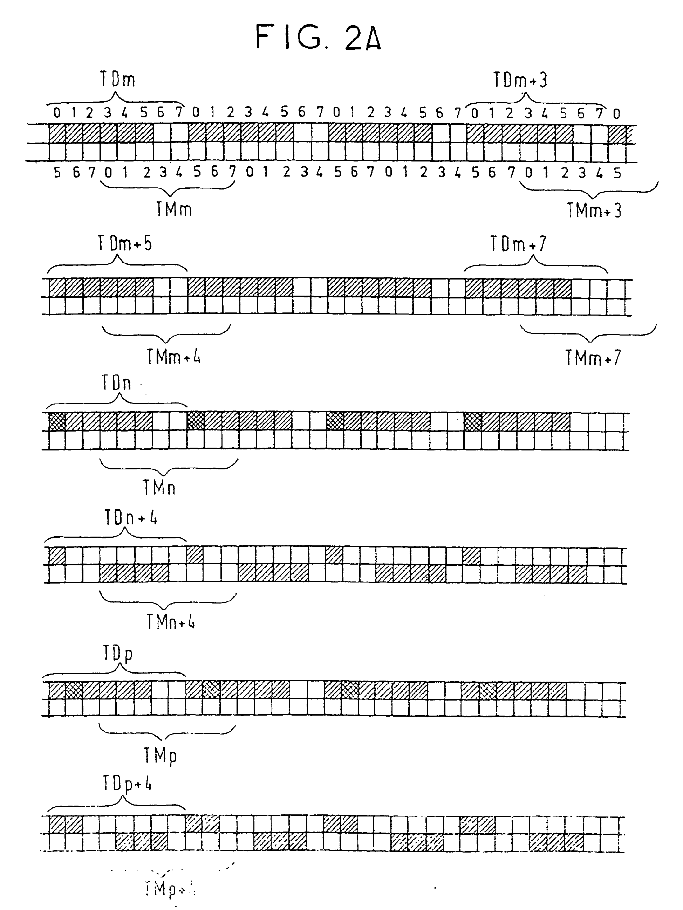

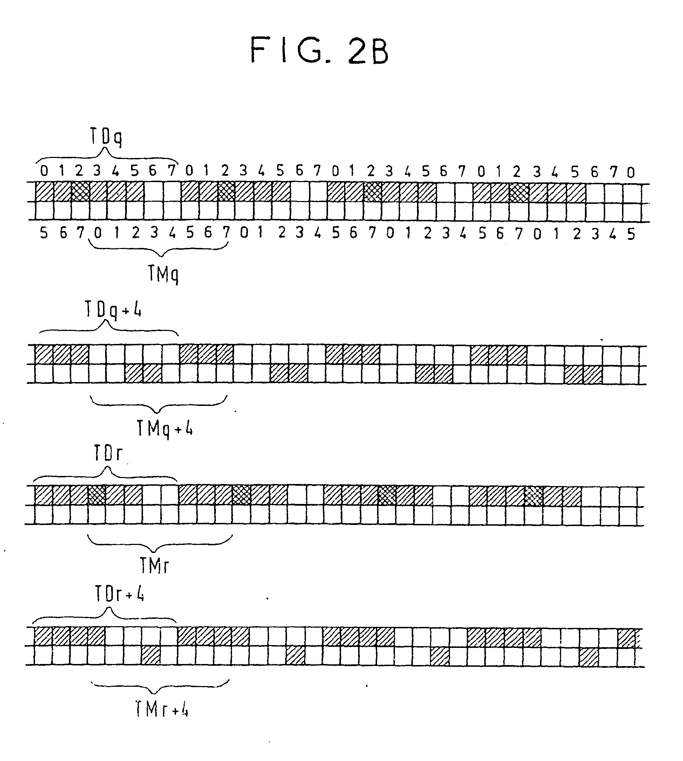

Dans l'exemple de la figure 2 on a illustré schématiquement un ensemble de trames descendantes successives TDm, ...TDm+7, ..., TDn, ...TDn+7, ..., TDp, ... TDp+7, ..., TDq, ...TDq+7, ..., TDr, ...TDr+7, ..., et un ensemble de trames montantes successives correspondantes TMm, ...TMm+7, ..., TMn, ...TMn+7, ..., TMp, ...TMp+7, ..., TMq, ...TMq+7, ..., TMr, ...TMr+7, ..., chacune de ces trames comportant, comme rappelé plus haut, un ensemble de huit intervalles de temps IT0 à IT7 (repérés simplement par leur numéro de 0 à 7), et les trames montantes étant, comme rappelé plus haut, décalées par rapport aux trames descendantes de trois intervalles de temps.

On a en outre indiqué par des hachures les intervalles de temps où le réseau transmet, dans les trames descendantes, vers la station mobile, ainsi que les intervalles de temps où la station mobile transmet, vers le réseau, dans les trames montantes, et par un quadrillage les intervalles de temps où le réseau transmet des autorisations d'émission à la station mobile.

Suivant un premier exemple, correspondant au cas des trames descendantes TDm à TDm+7 et des trames montantes TMm à TMm+7, le réseau transmet des données à la station mobile dans les intervalles de temps ITO à IT5 des trames descendantes TDm à TDm+3, sans donner d'autorisation d'émission à la station mobile.

Dans ce cas la station mobile ne transmet pas dans les trames montantes suivantes TMm+4 à TMm+7, le réseau pouvant alors continuer à transmettre dans les trames TMm+4 à TMm+7 de la même manière que sur les trames TDm à TDm+3, en l'occurrence dans les intervalles de temps IT0 à IT5.

Suivant un deuxième exemple, correspondant au cas des trames descendantes TDn à TDn+7 et des trames montantes TMn à TMn+7, le réseau transmet des données à la station mobile dans les intervalles de temps ITO à IT5 des trames descendantes TDn à TDn+3, en donnant en outre, à titre d'exemple dans les intervalles de temps ITO de ces trames, une autorisation d'émission à la station mobile.

Dans ce deuxième exemple, la station mobile transmet alors des données, non seulement dans l'intervalle de temps IT0, dit aussi intervalle de temps d'autorisation, de chacune des trames montantes suivantes TMn+4 à TMn+7, mais aussi dans des intervalles de temps consécutifs, identifiables à partir de cet intervalle de temps d'autorisation, suivant une loi prédéfinie.

A titre d'exemple d'une telle loi prédéfinie, il est défini une fenêtre temporelle, qui est formée d'intervalles de temps adjacents, et dans laquelle est transmis l'intervalle de temps d'autorisation, lesdits intervalles de temps consécutifs étant constitués par ceux des intervalles de temps de cette fenêtre temporelle qui sont compris entre l'intervalle de temps d'autorisation et le dernier intervalle de temps de cette fenêtre (ce dernier inclus), et qui sont considérés comme allouables à la station mobile pour une communication donnée.

Dans l'exemple considéré ici d'un réseau GSM, et d'une station mobile de type standard opérant en mode semi-duplex, une telle fenêtre temporelle ne doit pas en l'occurrence comporter plus de quatre intervalles de temps adjacents, pour tenir compte des deux intervalles de temps nécessaires à une station mobile de type standard pour effectuer la commutation de fréquence nécessaire.

A titre d'exemple, correspondant aux divers exemples illustrés sur la figure 2, cette fenêtre temporelle est formée des intervalles de temps IT0 à IT3, et il est en outre considéré, dans ces divers exemples, que tous les intervalles de temps de cette fenêtre peuvent être alloués à la station mobile considérée, notamment parce qu'aucun d'eux n'est déjà alloué à une autre station mobile.

Suivant le deuxième exemple, les intervalles de temps d'autorisation étant constitués par les intervalles de temps IT0, la station mobile transmet alors des données dans les intervalles de temps IT0 à IT3 des trames montantes suivantes, en l'occurrence les trames TMn+4 à TMn+7, le réseau ne transmettant plus alors que dans les intervalles de temps IT0 des trames descendantes correspondantes TDn+4 à TDn+7, pour laisser à la station mobile le temps d'effectuer la commutation de fréquence nécessaire.

Suivant un troisième exemple, correspondant au cas des trames descendantes TDp à TDp+7 et des trames montantes TMp à TMp+7, le réseau transmet des données à la station mobile dans les intervalles de temps IT0 à IT5 des trames descendantes TDp à TDp+3, en donnant en outre, dans les intervalles de temps IT1 de ces trames, une autorisation d'émission à la station mobile.

Dans ce troisième exemple, la station mobile transmet alors des données dans les intervalles de temps IT1 à IT3 des trames montantes suivantes, en l'occurrence les trames TMp+4 à TMp+7, le réseau n'émettant plus alors que dans les intervalles de temps IT0 et IT1 des trames descendantes correspondantes TDp+4 à TDp+7, pour laisser à la station mobile le temps d'effectuer la commutation de fréquence nécessaire.

Suivant un quatrième exemple, correspondant au cas des trames descendantes TDq à TDq+7 et des trames montantes TMq à Tmq+7, le réseau transmet des données à la station mobile dans les intervalles de temps IT0 à IT5 des trames descendantes TDq à TDq+3, en donnant en outre, dans les intervalles de temps IT2 de ces trames, une autorisation d'émission à la station mobile.

Dans ce quatrième exemple, la station mobile transmet alors des données dans les intervalles de temps IT2 et IT3 des trames montantes suivantes, en l'occurrence les trames TMq+4 à TMq+7, le réseau n'émettant plus alors que dans les intervalles de temps ITO à IT2 des trames descendantes correspondantes TDq+4 à TDq+7, pour laisser à la station mobile le temps d'effectuer la commutation de fréquence nécessaire.

Suivant un cinquième exemple, correspondant au cas des trames descendantes TDr à TDr+7 et des trames montantes TMr à Tmr+7, le réseau transmet des données à la station mobile dans les intervalles de temps IT0 à IT5 des trames descendantes TDr à TDr+3, en donnant en outre, dans les intervalles de temps IT3 de ces trames, une autorisation d'émission à la station mobile.

Dans ce cinquième exemple, la station mobile transmet alors des données dans les intervalles de temps IT3 des trames montantes suivantes, en l'occurrence les trames TMr+4 à TMr+7, le réseau n'émettant plus alors que dans les intervalles de temps ITO à IT3 des trames descendantes correspondantes TDr+4 à TDr+7, pour laisser à la station mobile le temps d'effectuer la commutation de fréquence nécessaire.

Ce dernier exemple, où un seul intervalle de temps est ainsi alloué, en émission, à la station mobile, correspond notamment au cas où le réseau demande à la station mobile un acquittement, suite à une transmission précédente de données du réseau vers la station mobile.

Les exemples considérés auparavant, où plus d'un intervalle de temps est alloué, en émission, à la station mobile, correspondent au contraire à des cas où la station mobile a besoin de transmettre des données au réseau, ce besoin étant, suivant des techniques connues, communiqué au réseau, prélablement à la mise en oeuvre de la procédure d'autorisation.

Le choix du nombre d'intervalles de temps alloué en émission à la station mobile, et donc ici le choix de l'emplacement de l'intervalle de temps d'autorisation, est opéré par le réseau, notamment en fonction des besoins de transmission du réseau vers la station mobile.

En d'autres termes, ledit canal d'autorisation est déplacé, en fonction de la quantité de données à transmettre par la station mobile, de manière à réduire, ou augmenter, le nombre desdits canaux consécutifs, suivant que cette quantité de données décroît, ou croît.

En outre, le nombre de canaux de transmission alloués en réception est réduit lorsque le nombre desdits canaux consécutifs est augmenté, de manière à conserver un temps de garde suffisant entre réception et émission, autorisant le fonctionnement suivant ledit mode semi-duplex.

Dans l'exemple illustré il a été considéré que tous les intervalles de temps de la fenêtre temporelle, formée dans cet exemple des intervalles de temps IT0 à IT3, peuvent être alloués pour une communication donnée à la station mobile considérée. Tel n'est pas nécessairement le cas; par exemple, si l'intervalle de temps IT2 de la fenêtre temporelle formée des intervalles de temps IT0 à IT3 n'était pas disponible:
- dans le cas où l'autorisation est donnée sur l'intervalle de temps ITO, la station mobile émettrait sur les intervalles de temps IT0, IT1 et IT3,
- dans le cas où l'autorisation est donnée sur l'intervalle de temps IT1, la station mobile émettrait sur les intervalles de temps IT1 et IT3,
- dans le cas où l'autorisation est donnée sur l'intervalle de temps IT3, la station mobile émettrait, comme précédemment, sur l'intervalle de temps IT3.

Dans l'exemple considéré ici d'un réseau GSM et de stations mobiles de type standard opérant dans le mode semi-duplex, il est considéré qu'un intervalle de temps non alloué en émission ou en réception est nécessaire pour permettre à la station mobile d'effectuer des mesures sur les cellules voisines, et que, dans le cas où une commutation de fréquence est en outre à effectuer, en plus de telles mesures, deux tels intervalles de temps consécutifs non alloués en émission ou en réception sont nécessaires.

Ainsi, dans les divers exemples illustrés sur la figure 2, les intervalles de temps IT6 et IT7 des trames descendantes TDm à TDm+7, TDn à TDn+3, TDp à TDp+3, TDq à TDq+3, et TDr à TDr+3, étant non alloués en émission ou en réception, peuvent être utilisés pour faire de telles mesures , et, si nécessaire, pour effectuer un changement de fréquence en réception pour le cas de transmission selon la technique du saut de fréquence (ou "frequency hopping").

De même, dans l'exemple illustré, les intervalles de temps IT1 et IT2 des trames descendantes TDn+4 à TDn+7, les intervalles de temps IT2 et IT3 des trames descendantes TDp+4 à TDp+7, les intervalles de temps IT3 et IT4 des trames descendantes TDq+4 à TDq+7, et les intervalles de temps IT4 et IT5 des trames descendantes TDr+4 à TDr+7, peuvent être utilisés pour effectuer de telles mesures et pour effectuer une commutation de fréquence.

On voit ainsi que dans chacun des exemples illustrés sur la figure 2, une mesure par trame peut être effectuée, ce qui correspond au cas idéal mentionné plus haut.

Le seul cas où une mesure ne pourrait pas être effectuée à l'intérieur d'une trame correspondrait au cas, non illustré spécifiquement, d'une trame descendante dont les intervalles de temps IT0 à IT7 seraient tous alloués en réception.

Pour compenser ce manque de mesures, et, corrélativement, pour maintenir vis-à-vis du réseau un certain nombre de mesures par unité de temps, une solution peut être trouvée, consistant à déplacer, dans les trames montantes, les intervalles de temps utilisés pour les acquittements par la station mobile, vers l'intervalle de temps IT0 de ces trames, de manière à réduire corrélativement le nombre d'intervalles de temps alloués en réception sur les trames descendantes associées. Par exemple, dans le cinquième exemple,en déplaçant l'intervalle de temps d'acquittement, de l'intervalle de temps IT3 des trames montantes TMr+4 à TMr+7, vers l'intervalle de temps IT2, ou IT1, ou IT0, de ces mêmes trames, ceci libère, suivant le cas, l'intervalle de temps IT3, ou les intervalles de temps IT2 et IT3, ou les intervalles de temps IT1, IT2 et IT3, des trames descendantes associées TDr+4 à TDr+7, pour effectuer de telles mesures.

Dans ce cas, l'autorisation d'émission transmise dans les trames descendantes associées TDr à TDr+3 serait transmise, selon le cas, dans l'intervalle de temps IT2, IT1, ou IT0 de ces trames descendantes. Bien que ceci entraîne alors une allocation de plus d'un intervalle de temps en émission (selon le cas, les intervalles de temps IT2 et IT3, ou IT1, IT2 et IT3, ou IT0, IT1, IT2, et IT3, des trames montantes considérées TMr+4 à TMr+7), un seul de ces intervalles de temps serait utilisé pour l'acquittement, ce qui libèrerait en outre des intervalles de temps supplémentaires pour effectuer des mesures.

Le schéma de la figure 3 est destiné à illustrer le type de moyens utilisés dans une station mobile pour utiliser le procédé d'allocation suivant l'invention.

Une telle station mobile comporte:
- des moyens 1 de réception de canaux de transmission sur des trames descendantes, et de détection d'autorisations d'émission contenues dans ces canaux reçus,
- des moyens 2 d'émission de canaux de transmission sur des trames montantes,
- des moyens 3 de commande de ces moyens d'émission et de réception, de manière à permettre un fonctionnement selon le procédé ainsi décrit.

Le schéma de la figure 4 est destiné à illustrer le type de moyens utilisés dans une une station fixe (appelée aussi station de base) d'un réseau de télécommunications mobiles, pour utiliser le procédé d'allocation suivant l'invention.

Une telle station fixe comporte:
- des moyens 4 d'émission de données dans des canaux de transmission sur lesdites trames descendantes, ainsi que d'autorisation d'émission sur certains de ces canaux émis,
- des moyens 5 de réception de canaux de transmission sur lesdites trames montantes,
- des moyens 6 de commande de ces moyens d'émission et de réception, de manière à permettre un fonctionnement selon le procédé ainsi décrit.

Les moyens d'émission (2 ou 4) ou de réception (1 ou 3) peuvent être des moyens classiques qui ne nécessitent donc pas d'être redécrits ici.

La réalisation particulière des moyens de commande (3 ou 6) de manière à faire fonctionner l'ensemble selon le procédé ainsi décrit, ne posant pas de problème particulier à l'homme du métier, ne sera pas non plus décrite de manière plus détaillée.

On comprendra par ailleurs que les divers cas illustrés sur la figure 2 ne constituent que des exemples destinés à illustrer le principe d'allocation suivant l'invention, et qu'une multitude d'autres cas peuvent se présenter en pratique.

On comprendra en outre que bien que le procédé d'allocation suivant l'invention ait été plus particulièrement décrit pour le cas de l'utilisation du service GPRS dans un réseau GSM, l'invention n'est pas limitée à une telle application, et n'est en outre pas limitée à un réseau TDMA, c'est-à-dire à accès multiple par multiplexage de canaux temporels, mais s'applique de manière générale à tout réseau à accès multiple par mutiplexage de canaux de transmission, que ce soit un réseau TDMA ("Time Division Multiple Access"), FDMA ("Frequency Division Multiple Access") ou encore CDMA ("Code Division Multiple Access").

## Revendications

1. Procédé d'allocation de canaux de transmission de données à une station mobile, notamment en mode semi-duplex, dans un réseau de télécommunications mobiles du type à accès multiple par multiplexage de canaux de transmission, et en mode paquet dans lequel les canaux de transmission alloués à une station mobile, respectivement dans un sens dit descendant, du réseau vers la station mobile, et dans un sens dit montant, de la station mobile vers le réseau, sont susceptibles de changer à chaque période dite période d'allocation, une autorisation d'émission reçue sur un canal de transmission dans le sens descendant pour une période d'allocation donnée valant allocation de ce canal de transmission dans le sens montant pour la période d'allocation suivante,
**caractérisé en ce qu'**une autorisation d'émission reçue sur un canal de transmission dans le sens descendant pour une période d'allocation donnée vaut allocation, dans le sens montant, pour la période d'allocation suivante, non seulement de ce canal de transmission, dit aussi canal d'autorisation, mais aussi de canaux de transmission consécutifs.

2. Procédé selon la revendication 1, **caractérisé en ce qu'**une autorisation d'émission reçue sur un canal de transmission dans le sens descendant pour une période d'allocation donnée vaut allocation, dans le sens montant, pour la période d'allocation suivante, non seulement de ce canal de transmission, dit aussi canal d'autorisation, mais aussi de canaux de transmission consécutifs, identifiables à partir dudit canal d'autorisation, selon une loi prédéfinie.

3. Procédé selon la revendication 2, **caractérisé en ce que** ladite loi prédéfinie est telle qu'il est défini une fenêtre qui est formée de canaux de transmission adjacents et dans laquelle est transmis le canal d'autorisation, lesdits canaux de transmission consécutifs étant constitués par ceux des canaux de transmission de cette fenêtre qui sont compris entre le canal d'autorisation et le dernier canal de transmission de cette fenêtre (ce dernier inclus), et qui sont allouables à la station mobile pour une communication donnée.

4. Procédé selon l'une des revendications 1 à 3, **caractérisé en ce que** ledit canal d'autorisation est déplacé, en fonction de la quantité de données à transmettre par la station mobile, de manière à réduire, ou augmenter, le nombre desdits canaux consécutifs, suivant que cette quantité de données décroît, ou croît.

5. Procédé selon l'une des revendications 1 à 4, **caractérisé en ce que** le nombre de canaux de transmission alloués en réception est réduit lorsque le nombre desdits canaux consécutifs est augmenté, de manière à conserver un temps de garde suffisant entre réception et émission, autorisant le fonctionnement suivant ledit mode semi-duplex.

6. Procédé selon l'une des revendications 1 à 5, **caractérisé en ce que** le canal d'autorisation destiné à autoriser l'émission d'un acquittement par la station mobile, dans un canal de transmission unique, est déplacé de manière à augmenter le nombre desdits canaux consécutifs, et par là-même réduire le nombre de canaux de transmission alloués en réception, afin de libérer des canaux de transmission pour l'écoute du réseau par la station mobile.

7. Station mobile, pour réseau de télécommunications mobiles en mode paquet et à accès multiple par multiplexage de canaux de transmission, dans lequel des canaux de transmission sont alloués à une station mobile, en mode semi-duplex, respectivement dans un sens dit descendant, du réseau vers la station mobile, et dans un sens dit montant, de la station mobile vers le réseau, ladite allocation étant susceptible de changer à chaque période dite période d'allocation,
**caractérisée en ce qu'**elle comporte:
- des moyens (1) de réception de canaux de transmission sur des trames descendantes, et de détection d'autorisations d'émission dans ces canaux reçus, qui détectent si une autorisation d'émission est reçue, pour une période d'allocation donnée, dans un canal de transmission dit canal d'autorisation,
- des moyens (2) d'émission de canaux de transmission sur des trames montantes,
- des moyens (3) de commande de ces moyens d'émission et de réception, de manière que ces moyens d'émission transmettent pour la période d'allocation suivante des données dans le sens montant non seulement dans un canal de transmission correspondant au canal d'autorisation, mais aussi dans des canaux de transmission consécutifs.

8. Station mobile selon la revendication 7, **caractérisée en ce qu'**elle comporte :
des moyens (3) de commande de ces moyens d'émission et de réception, de manière que ces moyens d'émission transmettent pour la période d'allocation suivante des données dans le sens montant non seulement dans un canal de transmission correspondant au canal d'autorisation, mais aussi dans des canaux de transmission consécutifs, identifiables à partir dudit canal d'autorisation, selon une loi prédéfinie.

9. Station mobile selon la revendication 7, **caractérisée en ce qu'**elle comporte :
des moyens (3) de commande de ces moyens d'émission et de réception, de manière que ces moyens d'émission transmettent pour la période d'allocation suivante des données dans le sens montant non seulement dans un canal de transmission correspondant au canal d'autorisation, mais aussi dans des canaux de transmission consécutifs, lesdits canaux de transmission consécutifs étant constitués par ceux des canaux de transmission d'une fenêtre qui sont compris entre le canal d'autorisation et le dernier canal de transmission de cette fenêtre, ce dernier inclus, et qui sont allouables à la station mobile pour une communication donnée, ladite fenêtre étant une fenêtre formée de canaux de transmission adjacents et dans laquelle est transmis le canal d'autorisation.

10. Station fixe pour réseau de télécommunications mobiles en mode paquet et à accès multiple par multiplexage de canaux de transmission, dans lequel des canaux de transmission sont alloués à une station mobile, en mode semi-duplex, respectivement dans un sens dit descendant, du réseau vers la station mobile, et dans un sens dit montant, de la station mobile vers le réseau, ladite allocation étant susceptible de changer à chaque période dite période d'allocation, **caractérisée en ce qu'**elle comporte:
- des moyens (4) d'émission de données dans des canaux de transmission sur des trames descendantes ainsi que d'autorisations d'émission dans certains de ces canaux émis, qui émettent, pour une période d'allocation donnée, dans un canal de transmission dit canal d'autorisation, une autorisation d'émission par une station mobile,
- des moyens (5) de réception de canaux de transmission sur des trames montantes,
- des moyens (6) de commande de ces moyens d'émission et de réception, de manière que ces moyens de réception reçoivent, pour la période d'allocation suivante, des données de ladite station mobile dans le sens montant, non seulement dans un canal de transmission correspondant au canal d'autorisation, mais aussi dans des canaux de transmission consécutifs.

11. Station fixe selon la revendication 10, **caractérisée en ce qu'**elle comporte :
des moyens (6) de commande de ces moyens d'émission et de réception, de manière que ces moyens de réception reçoivent, pour la période d'allocation suivante, des données de ladite station mobile dans le sens montant, non seulement dans un canal de transmission correspondant au canal d'autorisation, mais aussi dans des canaux de transmission consécutifs, identifiables à partir dudit canal d'autorisation, selon une loi prédéfinie.

12. Station fixe selon la revendication 10, **caractérisée en ce qu'**elle comporte :
des moyens (6) de commande de ces moyens d'émission et de réception, de manière que ces moyens de réception reçoivent, pour la période d'allocation suivante, des données de ladite station mobile dans le sens montant, non seulement dans un canal de transmission correspondant au canal d'autorisation, mais aussi dans des canaux de transmission consécutifs, lesdits canaux de transmission consécutifs étant constitués par ceux des canaux de transmission d'une fenêtre qui sont compris entre le canal d'autorisation et le dernier canal de transmission de cette fenêtre, ce dernier inclus, et qui sont allouables à la station mobile pour une communication donnée, ladite fenêtre étant une fenêtre formée de canaux de transmission adjacents et dans laquelle est transmis le canal d'autorisation.

13. Station fixe selon l'une des revendications 10 à 12, **caractérisée en ce qu'**elle comporte des moyens de commande desdits moyens d'émission et de réception, de manière que ledit canal d'autorisation est déplacé, en fonction de la quantité de données à transmettre par la station mobile, de manière à réduire, ou augmenter, le nombre desdits canaux consécutifs, suivant que cette quantité de données décroît, ou croît.

14. Station fixe selon l'une des revendications 10 à 13, **caractérisée en ce qu'**elle comporte des moyens de commande desdits moyens d'émission et de réception, de manière que le nombre de canaux de transmission alloués en réception est réduit lorsque le nombre desdits canaux consécutifs est augmenté, de manière à conserver un temps de garde suffisant entre réception et émission, autorisant le fonctionnement suivant ledit mode semi-duplex.

## Claims

1. A method of allocating data transmission channels to a mobile station, in particular in half-duplex mode, in a mobile telecommunications network of the type using packet mode and having multiple access by multiplexing transmission channels, in which method the transmission channels allocated to a mobile station, respectively in a "down" direction from the network to the mobile station and in an "up" direction from the mobile station to the network, can change at each "allocation period", a transmission authorization received over a transmission channel in the down direction for a given allocation period indicating that said transmission channel is allocated in the up direction for the following allocation period,
**characterized in that** a transmission authorization received over a transmission channel in the down direction for a given allocation period indicates allocation in the up direction for the following allocation period, not only of said transmission channel, also referred to as the authorization channel, but also of consecutive transmission channels.

2. A method according to claim 1, **characterised in that** a transmission authorization received on a down transmission channel for a given allocation period indicates allocation, in the up direction, for the following allocation period, not only of said transmission channel, also referred to as the authorization channel, but also of consecutive transmission channels, identifiable from said authorization channel according to a predefined relationship.

3. A method according to claim 2, **characterised in that** said predefined relationship is such that a window is defined that is formed of adjacent transmission channels, and in which the authorization channel is transmitted, said consecutive transmission channels being constituted by those of the transmission channels of the window which lie between the authorization channel and the last transmission channel of the window (including said last transmission channel), and which are allocatable to the mobile station for a given call.

4. A method according to one of one of claims 1 to 3, **characterised in that** said authorization channel is displaced as a function of the quantity of data to be transmitted by the mobile station, so as to reduce, or to increase, the number of said consecutive channels, depending on whether said quantity of data decreases or increases.

5. A method according to one of claims 1 to 4, **characterised in that** the number of transmission channels allocated for reception is reduced when the number of said consecutive channels is increased, so as to retain a guard time that is long enough between reception and transmission, thereby making half-duplex mode operation possible.

6. A method according to one of claims 1 to 5, **characterised in that** the authorization channel designed to authorize transmission of an acknowledgement by the mobile station, in a single transmission channel, is displaced so as to increase the number of said consecutive channels, and also to reduce the number of transmission channels allocated to reception, so as to free up the transmission channels so that the mobile station can listen to the network.

7. A mobile station for a mobile telecommunication network using packet mode and having multiple access by multiplexing transmission channels, in which transmission channels are allocated to a mobile station, in half-duplex mode, respectively in a "down" direction, from the network to the mobile station, and in an "up" direction, from the mobile station to the network, where said allocation can change at each allocation period,
**characterised in that** it comprises:
- means (1) for receiving transmission channels over down frames, and for detecting transmission authorizations in the received channels, which detect whether a transmission authorization is received, for a given allocation period, in a transmission channel referred to as an authorization channel,
- means (2) for transmitting transmission channels over up frames,
- means (3) for controlling these transmission and reception means, so that said transmission means transmit data in the up direction for the following allocation period not only in a transmission channel corresponding to the authorization channel, but also in consecutive transmission channels.

8. A mobile station according to claim 7, **characterised in that** it comprises:
- means (3) for controlling these transmission and reception means, so that said transmission means transmit data in the up direction for the following allocation period not only in a transmission channel corresponding to the authorization channel, but also in consecutive transmission channels, identifiable from said authorization channel according to a predefined relationship.

9. A mobile station according to claim 7, **characterised in that** it comprises:
means (3) for controlling these transmission and reception means, so that said transmission means transmit data in the up direction for the following allocation period not only in a transmission channel corresponding to the authorization channel, but also in consecutive transmission channels, said consecutive transmission channels being constituted by those of the transmission channels of a window which lie between the authorization channel and the last transmission channel of the window (including said last transmission channel), and which are considered to be allocatable to the mobile station for a given call, said window being a window formed of adjacent transmission channels and in which the authorization channel is transmitted.

10. A fixed station for a mobile telecommunication network using packet mode and having multiple access by multiplexing transmission channels, in which transmission channels are allocated to a mobile station, in half-duplex mode, respectively in a "down" direction, from the network to the mobile station, and in an "up" direction, from the mobile station to the network, where said allocation can change at each allocation period, **characterised in that** it comprises:
- means (4) for transmitting data in transmission channels over down frames as well as transmission authorizations in some of these transmitted channels, which transmit, for a given allocation period, on a transmission channel called authorization channel, a transmission authorization by a mobile station,
- means (5) for receiving transmission channels over up frames,
- means (6) for controlling these transmission and reception means, so that said reception means receive data, for the following allocation period, in the up direction from said mobile station not only in a transmission channel corresponding to the authorization channel, but also in consecutive transmission channels.

11. A fixed station according to claim 10, **characterised in that** it comprises:
means (6) for controlling these transmission and reception means, so that said reception means receive data, for the following allocation period, in the up direction from said mobile station not only in a transmission channel corresponding to the authorization channel, but also in consecutive transmission channels, identifiable from said authorization channel according to a predefined relationship.

12. A fixed station according to claim 10, **characterised in that** it comprises:
means (6) for controlling these transmission and reception means, so that said reception means receive data, for the following allocation period, from said mobile station in the up direction not only in a transmission channel corresponding to the authorization channel, but also in consecutive transmission channels, said consecutive transmission channels being constituted by those of the transmission channels of a window which lie between the authorization channel and the last transmission channel of the window, including said last transmission channels, and which are allocatable to the mobile station for a given call, said window being a window formed of adjacent transmission channels and in which the authorization channel is transmitted.

13. A fixed station according to one of claims 10 to 12, **characterised in that** it comprises means for controlling said transmission and reception means, so that said authorization channel is displaced as a function of the quantity of data to be transmitted by the mobile station, so as to reduce, or to increase, the number of said consecutive channels, depending on whether said quantity of data decreases or increases.

14. A fixed station according to one of claims 10 to 13, **characterised in that** it comprises means of controlling said transmission and reception means so that the number of transmission channels allocated for reception is reduced when the number of said consecutive channels is increased, so as to retain a guard time that is long enough between reception and transmission, thereby making half-duplex mode operation possible.

## Patentansprüche

1. Verfahren zur Zuweisung von Datenübertragungskanälen an eine Mobilstation, insbesondere im Halbduplex-Verfahren, in einem Mobilfunk-Telekommunikationsnetz vom Typ mit Mehrfachzugriff durch Multiplexen der Übertragungskanäle, und im Paketvermittlungsmodus, in welchem die einer Mobilstation zugewiesenen Übertragungskanäle, jeweils in einer als absteigend bezeichneten Richtung vom Netz zur Mobilstation beziehungsweise in einer als aufsteigend bezeichneten Richtung von der Mobilstation zum Netz, in jedem als Zuweisungszeitraum bezeichneten Zeitraum eine auf einem Übertragungskanal in absteigender Richtung für einen gegebenen Zuweisungszeitraum empfangene Sendegenehmigung ändern können, wobei diese als Zuweisung dieses Übertragungskanals in aufsteigender Richtung für den folgenden Zuweisungszeitraum gilt;
**dadurch gekennzeichnet, dass** eine auf einem Übertragungskanal in absteigender Richtung empfangene Sendegenehmigung für einen gegebenen Zuweisungszeitraum als Zuweisung in aufsteigender Richtung für den folgenden Zuweisungszeitraum gilt, und zwar nicht nur für diesen Übertragungskanal, der auch als Genehmigungskanal bezeichnet wird, sondern auch für die darauf folgenden Übertragungskanäle.

2. Verfahren nach Anspruch 1, **dadurch gekennzeichnet, dass** eine auf einem Übertragungskanal in absteigender Richtung für einen gegebenen Zuweisungszeitraum empfangene Sendegenehmigung als Zuweisung, in aufsteigender Richtung, für den darauf folgenden Zuweisungszeitraum gilt, und zwar nicht nur für diesen Übertragungskanal, der auch als Genehmigungskanal bezeichnet wird, sondern auch für die darauf folgenden Übertragungskanäle, die ausgehend von dem besagten Genehmigungskanal gemäß einer zuvor definierten Regel identifizierbar sind.

3. Verfahren nach Anspruch 2, **dadurch gekennzeichnet, dass** die besagte zuvor definierte Regel der Art ist, dass ein Fenster definiert wird, das von benachbarten Übertragungskanälen gebildet wird und in welchem der Genehmigungskanal übertragen wird, wobei die besagten darauf folgenden Übertragungskanäle aus denjenigen der Übertragungskanäle dieses Fensters bestehen, die zwischen dem Genehmigungskanal und dem letzten Übertragungskanal dieses Fensters (einschließlich des letzten Übertragungskanals) begriffen sind und der Mobilstation für eine gegebene Verbindung zugewiesen werden können.

4. Verfahren nach einem der Ansprüche 1 bis 3, **dadurch gekennzeichnet, dass** der besagte Genehmigungskanal in Abhängigkeit von der Menge der von der Mobilstation zu übertragenden Daten derart verschoben wird, dass die Anzahl der besagten darauf folgenden Kanäle je nachdem, ob die Datenmenge abnimmt oder zunimmt, verringert oder erhöht wird.

5. Verfahren nach einem der Ansprüche 1 bis 4, **dadurch gekennzeichnet, dass** die Anzahl der für den Empfang zugewiesenen Übertragungskanäle verringert wird, wenn die Anzahl der besagten darauf folgenden Kanäle erhöht wird, sodass eine ausreichende Wartezeit zwischen Empfangen und Senden gewahrt bleibt, wodurch eine Betriebsweise gemäß dem besagten Halbduplex-Verfahren ermöglicht wird.

6. Verfahren nach einem der Ansprüche 1 bis 5, **dadurch gekennzeichnet, dass** der Genehmigungskanal, der dazu dient, das Senden einer Bestätigung durch die Mobilstation in einem einzigen Übertragungskanal zu genehmigen, derart verschoben wird, dass die Anzahl der besagten darauf folgenden Kanäle erhöht wird und infolgedessen die Anzahl der für den Empfang zugewiesenen Kanäle verringert wird, um Übertragungskanäle für das Abhören des Netzes durch die Mobilstation freizugeben.

7. Mobilstation für ein Mobilfunk-Telekommunikationsnetz im Paketvermittlungsmodus und mit Mehrfachzugriff durch Multiplexen der Übertragungskanäle, wobei einer Mobilstation, im Halbduplex-Modus und jeweils in der als absteigend bezeichneten Richtung vom Netz zur Mobilstation und in der als aufsteigend bezeichneten Richtung von der Mobilstation zum Netz, Übertragungskanäle zugewiesen werden, wobei sich die besagte Zuweisung für jeden als Zuweisungszeitraum bezeichneten Zeitraum ändern kann,
**dadurch gekennzeichnet, dass** sie umfasst:
- Vorrichtungen (1) zum Empfangen von Übertragungskanälen in absteigenden Blöcken, und zum Erkennen von Sendegenehmigungen in diesen empfangenen Kanälen, wobei diese Vorrichtungen erkennen, ob eine Sendegenehmigung für einen gegebenen Zuweisungszeitraum in einem als Genehmigungskanal bezeichneten Übertragungskanal empfangen wird,
- Vorrichtungen (2) zum Senden von Übertragungskanälen in aufsteigenden Blöcken,
- Vorrichtungen (3) zur Steuerung dieser Sende- und Empfangsvorrichtungen in der Weise, dass diese Sendevorrichtungen für den folgenden Zuweisungszeitraum Daten in der aufsteigenden Richtung nicht nur in einem dem Genehmigungskanal entsprechenden Übertragungskanal übertragen, sondern auch in darauf folgenden Übertragungskanälen.

8. Mobilstation nach Anspruch 7, **dadurch gekennzeichnet, dass** sie umfasst:
Vorrichtungen (3) zur Steuerung dieser Sende- und Empfangsvorrichtungen in der Weise, dass diese Sendevorrichtungen für den folgenden Zuweisungszeitraum Daten in der aufsteigenden Richtung nicht nur in einem dem Genehmigungskanal entsprechenden Übertragungskanal übertragen, sondern auch in darauf folgenden Übertragungskanälen, die ausgehend von dem besagten Genehmigungskanal gemäß einer zuvor definierten Regel identifizierbar sind.

9. Mobilstation nach Anspruch 7, **dadurch gekennzeichnet, dass** sie umfasst:
Vorrichtungen (3) zur Steuerung dieser Sende- und Empfangsvorrichtungen in der Weise, dass diese Sendemittel für den folgenden Zuweisungszeitraum Daten in der aufsteigenden Richtung nicht nur in einem dem Genehmigungskanal entsprechenden Übertragungskanal übertragen, sondern auch in darauf folgenden Übertragungskanälen, wobei die besagten darauf folgenden Kanäle aus denjenigen Übertragungskanälen eines Fensters bestehen, die zwischen dem Genehmigungskanal und dem letzten Übertragungskanal dieses Fensters (einschließlich des letzten Übertragungskanals) begriffen sind und der Mobilstation für eine gegebene Verbindung zugewiesen werden können, wobei das besagte Fenster ein aus benachbarten Übertragungskanälen gebildetes Fenster ist, in welchem der Genehmigungskanal übertragen wird.

10. Ortsfeste Station für ein Mobilfunk-Telekommunikationsnetz im Paketvermittlungsmodus und mit Mehrfachzugriff durch Multiplexen der Übertragungskanäle, wobei einer Mobilstation, im Halbduplex-Modus und jeweils in der als absteigend bezeichneten Richtung vom Netz zur Mobilstation und in der als aufsteigend bezeichneten Richtung von der Mobilstation zum Netz, Übertragungskanäle zugewiesen werden, wobei sich die besagte Zuweisung für jeden als Zuweisungszeitraum bezeichneten Zeitraum ändern kann, **dadurch gekennzeichnet, dass** sie umfasst:
- Vorrichtungen (4) zum Senden von Daten in Übertragungskanälen in absteigenden Blöcken sowie von Sendegenehmigungen in einigen dieser gesendeten Kanäle, wobei diese Vorrichtungen für einen gegebenen Zuweisungszeitraum in einem als Genehmigungskanal bezeichneten Übertragungskanal eine Genehmigung zum Senden durch eine Mobilstation senden,
- Vorrichtungen (5) zum Empfangen von Übertragungskanälen in aufsteigenden Blöcken,
- Vorrichtungen (6) zur Steuerung dieser Sende- und Empfangsvorrichtungen in der Weise, dass diese Empfangsvorrichtungen für den folgenden Zuweisungszeitraum Daten von der besagten Mobilstation in der aufsteigenden Richtung nicht nur in einem dem Genehmigungskanal entsprechenden Übertragungskanal empfangen, sondern auch in darauf folgenden Übertragungskanälen.

11. Ortsfeste Station nach Anspruch 10, **dadurch gekennzeichnet, dass** sie umfasst:
Vorrichtungen (6) zur Steuerung dieser Sende- und Empfangsvorrichtungen in der Weise, dass die Empfangsmittel für den folgenden Zuweisungszeitraum Daten von der besagten Mobilstation in der aufsteigenden Richtung nicht nur in einem dem Genehmigungskanal entsprechenden Übertragungskanal empfangen, sondern auch in darauf folgenden Übertragungskanälen, die ausgehend von dem besagten Genehmigungskanal gemäß einer zuvor definierten Regel identifizierbar sind.

12. Ortsfeste Station nach Anspruch 10, **dadurch gekennzeichnet, dass** sie umfasst:
Vorrichtungen (6) zur Steuerung dieser Sende- und Empfangsmittel in der Weise, dass diese Empfangsmittel für den folgenden Zuweisungszeitraum Daten von der besagten Mobilstation in der aufsteigenden Richtung nicht nur in einem dem Genehmigungskanal entsprechenden Übertragungskanal empfangen, sondern auch in darauf folgenden Übertragungskanälen, wobei die besagten darauf folgenden Übertragungskanäle aus denjenigen der Übertragungskanäle eines Fensters bestehen, die zwischen dem Genehmigungskanal und dem letzten Übertragungskanal dieses Fensters (einschließlich des letzten Übertragungskanals) begriffen sind und der Mobilstation für eine gegebene Verbindung zugewiesen werden können, wobei das besagte Fenster ein aus benachbarten Übertragungskanälen gebildetes Fenster ist, in welchem der Genehmigungskanal übertragen wird.

13. Ortsfeste Station nach einem der Ansprüche 10 bis 12, **dadurch gekennzeichnet, dass** sie Vorrichtungen zur Steuerung der besagten Sende- und Empfangsvorrichtungen umfasst, und zwar in der Weise, dass der besagte Genehmigungskanal in Abhängigkeit von der Menge der von der Mobilstation zu übertragenden Daten derart verschoben wird, dass die Anzahl der besagten darauf folgenden Kanäle je nachdem, ob diese Datenmenge abnimmt oder zunimmt, verringert oder erhöht wird.

14. Ortsfeste Station nach einem der Ansprüche 10 bis 13, **dadurch gekennzeichnet**, das sie Vorrichtungen zur Steuerung der besagten Sende- und Empfangsvorrichtungen umfasst, und zwar in der Weise, dass die Anzahl der für den Empfang zugewiesenen Übertragungskanäle verringert wird, wenn die Anzahl der besagten darauf folgenden Kanäle erhöht wird, sodass eine ausreichende Wartezeit zwischen Empfangen und Senden gewahrt bleibt, wodurch eine Betriebsweise gemäß dem besagten Halbduplex-Verfahren ermöglicht wird.
